Europäisches Patentamt

European Patent Office

Office européen des brevets

(11) Numéro de publication: **0 376 384**
**A1**

## (12) DEMANDE DE BREVET EUROPEEN

(21) Numéro de dépôt: **89203258.2**

(51) Int. Cl.⁵: **H04J 3/06, H04L 7/04**

(22) Date de dépôt: **20.12.89**

(30) Priorité: **30.12.88 FR 8817498**

(43) Date de publication de la demande:
**04.07.90 Bulletin 90/27**

(84) Etats contractants désignés:
**DE FR GB IT**

(71) Demandeur: **TELECOMMUNICATIONS RADIOELECTRIQUES ET TELEPHONIQUES T.R.T.**
**88 rue Brillat Savarin**
**F-75640 Paris Cédex 13(FR)**

(72) Inventeur: **Langlais, Thierry**
**Société Civile S.P.I.D. 209 rue de l'Université**
**F-75007 Paris(FR)**
Inventeur: **Bastien, Jean-Paul**
**Société Civile S.P.I.D. 209 rue de l'Université**
**F-75007 Paris(FR)**
Inventeur: **Boisson, Jean-Yves**
**Société Civile S.P.I.D. 209 rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Dispositif de transmission d'informations utilisant un codage statistique, partie émission et partie réception convenant pour un tel dispositif.**

(57) Pour assurer une synchronisation robuste, malgré les erreurs de transmission, chaque série d'échantillons (W7, W8,... W9, W8) codés selon un nombre variable d'éléments binaires est suivie de deux codes autosynchronisables WSL. Ainsi une erreur survenant même sur des codes WSL est sans influence sur la synchronisation.
Application : transmission d'images TV.

FIG. 4

## Dispositif de transmission d'informations utilisant un codage statistique, partie émission et partie réception convenant pour un tel dispositif.

La présente invention concerne un dispositif de transmission d'informations utilisant un codage statistique, dispositif comportant une partie émission destinée à transmettre des informations se présentant sous forme de série d'échantillons numériques et pourvu à cet effet d'un organe de codage statistique pour transformer les échantillons numériques en mots de code statistique et un circuit multiplexeur pour insérer parmi les mots de code statistique des mots de synchronisation, et au moins une partie réception pourvue d'un organe de réception pour recevoir les mots de codes transmis et d'un circuit de correction coopérant avec un circuit de détection de mot de synchronisation pour pouvoir rétablir les séries d'échantillons numériques après le traitement apporté par un organe de décodage statistique afin de les fournir à un organe d'utilisation.

Un tel dispositif trouve des applications importantes, notamment pour la transmission, sous forme numérique, d'images de télévision, chaque série d'échantillons représentant alors une ligne de l'image et les échantillons les points d'image (pixels).

Le problème qui se pose avec ce genre de dispositif est sa vulnérabilité aux erreurs de transmission. Une erreur de transmission affecte en premier lieu l'échantillon contenant cette erreur et peut se répercuter sur les échantillons suivants ; il s'ensuit que, bien que finalement les échantillons soient reconnus convenablement, ils ne correspondent plus à la place de l'échantillon dans la série. Ce changement de place se propage de ligne en ligne et l'on obtient ainsi une image dont la qualité est fortement dégradée. L'utilisation d'un code de synchronisation permet de résoudre ce problème.

Dans la demande de brevet français N° 87 09 446 déposée le 3 juillet 1987 au nom de la demanderesse, on a préconisé de disséminer dans les paquets le code de synchronisation. Bien que cette mesure donne entièrement satisfaction en ce qui concerne les erreurs survenant en paquets, c'est-à-dire pendant un temps supérieur à la durée de transmission d'un mot de code de synchronisation, la demanderesse a cependant cherché une solution nécessitant moins de matériel et donnant finalement en pratique une bonne invulnérabilité aux erreurs.

Pour cela, un dispositif du genre mentionné dans le préambule est remarquable en ce que le mot de synchronisation est un mot de code autosynchronisable inséré au moins deux fois aux extrémités des séries.

Ce qu'on entend par code autosynchronisable est un mot de code comportant un suffixe qui est soit un mot de code, soit la concaténation de plusieurs mots de ce code. L'article suivant donne toute indication en ce qui concerne ce sujet : "Self-Synchronizing Huffman Codes" de THOMAS J. FERGUSON et al. paru dans IEEE TRANSACTION ON INFORMATION THEORY, Vol.IT-30, N° 4, juillet 1984.

L'invention concerne aussi une partie émission convenant pour un tel dispositif et comportant un organe de codage statistique pour transformer des échantillons numériques à transmettre en mots de code statistique et un circuit multiplexeur pour insérer parmi les mots de code statistique des mots de synchronisation, un mot de code autosynchronisable répété au moins deux fois aux extrémités des séries.

L'invention concerne enfin une partie réception convenant pour un tel dispositif et comportant un organe de réception pour recevoir des séries de mots de code transmis aux extrémités desquelles sont disposés des mots de synchronisation formés d'au moins deux mots de code d'autosynchronisation, un circuit de détection de mot de code d'autosynchronisation pour fournir un signal de reconnaissance de mot de code, un organe de mémorisation d'une capacité suffisante pour contenir au moins une série d'échantillons, un compteur d'écriture pour former des codes d'adresses définissant les emplacements des échantillons à enregistrer, transmis dans ledit organe de mémorisation, un compteur de lecture pour définir l'emplacement dans l'organe de mémorisation de l'échantillon à fournir à un organe d'utilisation et un organe de séquencement destiné à bloquer ou à autoriser la progres

La description suivante, en regard des dessins annexés, le tout donné à titre d'exemple non limitatif, fera bien comprendre comment l'invention peut être réalisée.

La figure 1 montre la partie émission d'un dispositif conforme à l'invention.

La figure 2 représente l'arbre de codage utilisé pour coder sous forme statistique les échantillons à transmettre.

La figure 3 montre la partie réception d'un dispositif conforme à l'invention.

La figure 4 montre comment sont insérés, conformément à l'invention, les mots de code de synchronisation.

La figure 5 est destinée à montrer les effets perturbateurs d'erreurs de transmission sur les séries de codes.

La figure 6 est destinée à l'explication du fonctionnement du circuit de correction.

La figure 7 est une légende se rapportant à la figure 6.

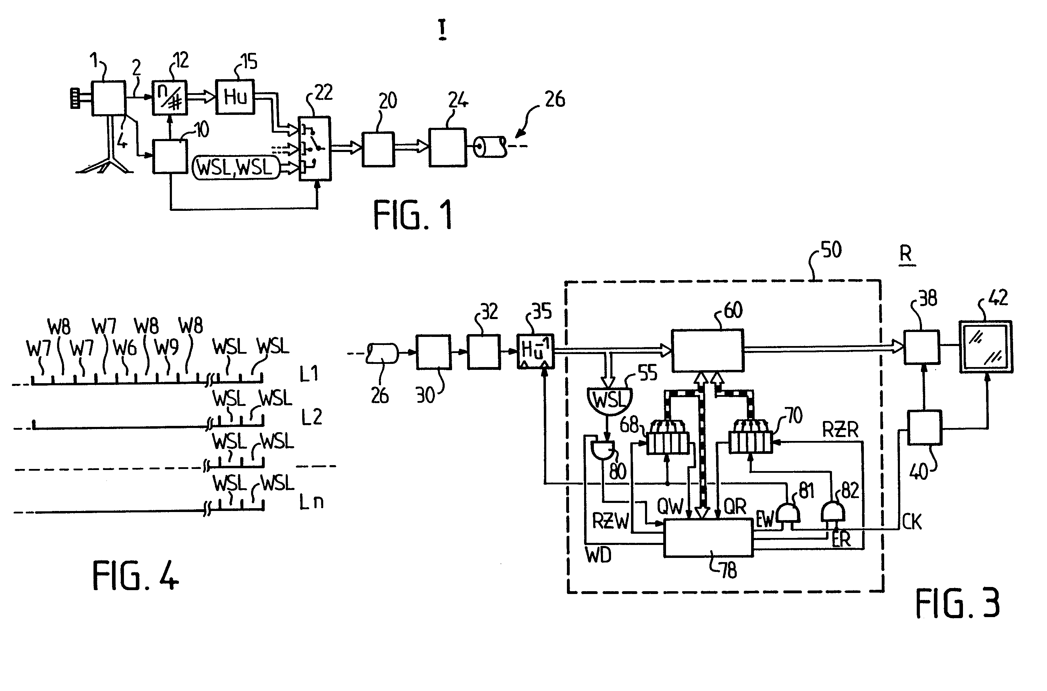

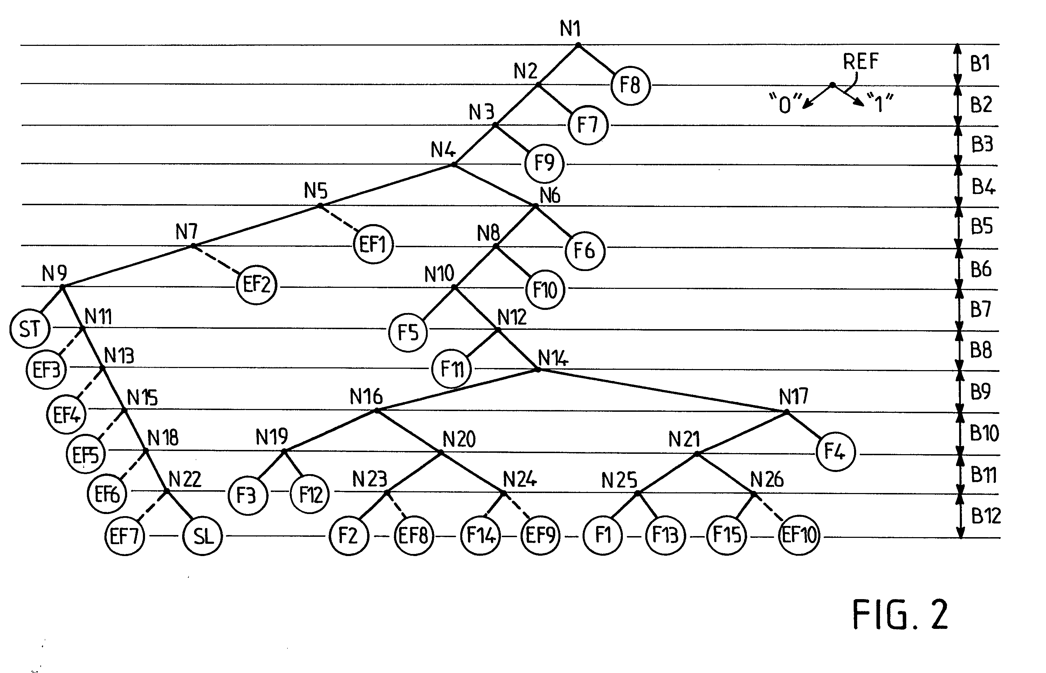

A la figure 1, on a représenté la partie émission T d'un dispositif conforme à l'invention. La référence 1 indique une caméra de télévision. Cette caméra fournit sur une sortie 2 des signaux de luminance et sur une sortie 4 des signaux nécessaires au bon fonctionnement d'une base de temps émission 10. Les signaux de luminance sont transformés au moyen d'un convertisseur analogique-numérique 12 en un code binaire comportant un nombre fixe d'éléments binaires, par exemple 4. Puis ce code est transformé en un code statistique ou code d'Huffman au moyen d'un codeur 15, de préférence du type décrit dans la demande de brevet français N° 88 10 617 déposée le 5 août 1988 au nom de la demanderesse. Le Tableau I ci-dessous précise le codage utilisé dans l'exemple de réalisation décrit ici.

## TABLEAU I

| Colonne 1 | Colonne 2 | Colonne 3 | Colonne 4 |
|---|---|---|---|
| Réf. des mots identifié | Code statistique (en binaire) | longueur en eb | Réf. de la feuille |
| W8 | 1 | 1 | F8 |
| W7 | 01 | 2 | F7 |
| W9 | 001 | 3 | F9 |
| W6 | 00011 | 5 | F6 |
| W10 | 000101 | 6 | F10 |
| W5 | 0001000 | 7 | F5 |
| W11 | 00010010 | 8 | F11 |
| W4 | 0001001111 | 10 | F4 |
| W12 | 00010011001 | 11 | F12 |
| W3 | 00010011000 | 11 | F3 |
| W2 | 000100110100 | 12 | F2 |
| W14 | 000100110110 | 12 | F14 |
| W1 | 000100111000 | 12 | F1 |
| W13 | 000100111001 | 12 | F13 |
| W15 | 000100111010 | 12 | F15 |
| WSL | 000000111111 | 12 | SL |
| WST | 0000000 | 7 | ST |

Ce codage peut être aussi représenté par un arbre de codage comme le montre la figure 2. Sur cette figure, on distingue les noeuds N1 à N26 et les feuilles F1 à F15, EF1 à EF10, ST et SL.

Les feuilles représentent les mots de code statistique obtenus en parcourant l'arbre à partir du noeud N1. Le premier élément binaire B1 du mot statistique sera un "1" si l'on va à droite ou un "0" si l'on va à gauche. Ceci est rappelé par la référence REF. Un code est déterminé dès que l'on arrive sur une feuille et la valeur d'éléments binaires B2 à B12 est déterminée en s'aidant de la référence REF. Ainsi les feuilles F1 à F15, SL et ST correspondent aux codes W1 à W15, WSL et WST indiqués dans le Tableau I. Les feuilles EF1 à EF10 correspondent à des mots de code statistique erronés par des erreurs de transmission par exemple. Aux feuilles EF1 à EF7 et EF9 on fait correspondre au décodage de manière arbitraire, le mot W8 et aux feuilles EF8 et EF10 les mots W9 et W7. Ceci est explicité dans le Tableau II.

3

## TABLEAU II

| Colonne 1 | Colonne 2 | Colonne 3 | Colonne 4 |
|---|---|---|---|
| Réf. des mots identifié | Code statistique (en binaire) | longueur en eb | Réf. de la feuille |
| W8 | 00001 | 5 | EF1 |
| W8 | 000001 | 6 | EF2 |
| W8 | 00000010 | 8 | EF3 |
| W8 | 000000110 | 9 | EF4 |
| W8 | 0000001110 | 10 | EF5 |
| W8 | 00000011110 | 11 | EF6 |
| W8 | 000000111110 | 12 | EF7 |
| W8 | 000100110101 | 12 | EF8 |
| W9 | 000100110111 | 12 | EF9 |
| W7 | 000100111011 | 12 | EF10 |

Ces mots statistiques sont ensuite emmagasinés dans une mémoire tampon émission 20 en transitant par un multiplexeur 22. Les données contenues dans la mémoire 20 sont utilisées par un organe d'émission 24 pour être émises sur un canal de transmission 26.

A la figure 3, on a représenté la partie réception R d'un dispositif conforme à l'invention. La référence 30 indique un organe de réception qui reçoit les données transmises par le canal 26. Ces données sont emmagasinées dans une mémoire tampon réception 32. Un décodeur de mots statistiques 35 restitue les mots W-- pour les fournir à un organe d'interface 38. De préférence ce décodeur est du type décrit dans la demande de brevet français déposée au nom de la demanderesse le 6 décembre 1988 sous le numéro 88 15 959. L'organe 38 coopère avec une base de temps 40 pour que des signaux convenables soient appliqués à un organe de visualisation 42.

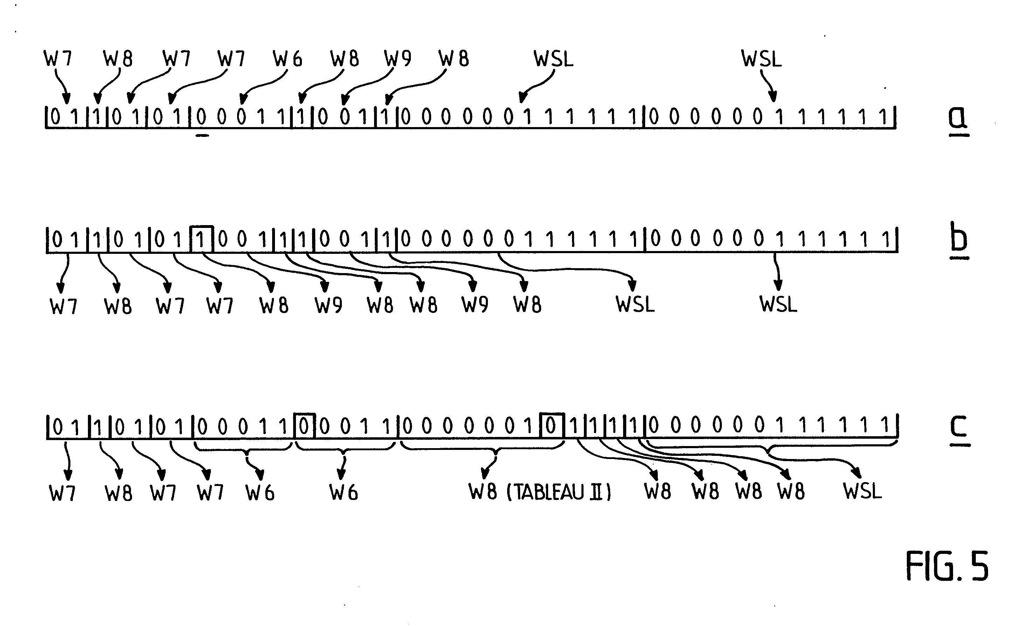

A la figure 4 on montre schématiquement des lignes de points d'images $L_1$, $L_2$, ..., $L_n$ qui sont transmises par le dispositif de l'invention. A chaque pixel (point d'image) on affecte un mot W.. par exemple la ligne $L_1$ comporte en son sein la suite de huit mots W7, W8, W7, W7, W6, W8, W9, W8. A cette suite de mots va correspondre une série de mots statistiques explicités à la figure 5a. Si par suite d'une erreur de transmission un élément binaire est inversé, par exemple l'élément binaire souligné, cette série donnera la suite de dix mots W7, W8, W7, W7, W8, W9, W8, W8, W9, W8 comme cela est explicité à la figure 5b. On assiste donc à un décalage dans le temps de la correspondance entre le code et l'emplacement du pixel. La présente invention propose donc des moyens qui assurent de temps à autre ou périodiquement la bonne correspondance de mots de code avec leur pixel. De préférence, on s'assure de cette correspondance à chaque ligne d'image. Pour cela, en fin de chaque ligne on insère au moins deux mots de code autosynchronisables WSL (voir figures 4 et 5) comme mots de synchronisation. Le mot autosynchronisable retenu est le mot WSL correspondant à la feuille SL ; ce mot est donc :
"000000111111".

On constate que conformément à la définition donnée ci-dessus ce mot comporte un suffixe "111111" qui est la concaténation de six mots "1" (mot W8 Tableau I). Ainsi si une série (une ligne dans l'application envisagée) a été transmise d'une manière erronée le suffixe du premier WSL permettra que le deuxième mot WSL soit reconnu, lui, comme mot de synchronisation.

A la figure 5c on a représenté le cas où deux erreurs de transmission se produisent. Elles sont entourées sur la figure 5c. La première affecte les pixels d'images et provoque même le décodage du mot W8 issu du Tableau II affectant des codes aux chaînes d'éléments binaires erronés. La deuxième affecte le mot de synchronisation WSL lui-même mais le second mot WSL est reconnu et la synchronisation assurée.

Pour cela, le dispositif de l'invention est formé de la manière suivante.

On a prévu un organe de correction 50 qui est inséré entre la sortie du décodeur 35 et l'entrée de l'organe d'interface 38 et qui comporte un organe de décodage 55 pour reconnaître le mots WSL, une mémoire tampon de synchronisation 60 (mémoire genre FIFO du type NPD42505C fabriquée par NEC, par exemple), pour contenir toute une ligne d'échantillons décodés par 35, un compteur d'écriture 68 pour fixer l'emplacement dans la mémoire 60 de l'échantillon à y inscrire, un compteur de lecture 70 pour définir l'emplacement dans la mémoire 60 de l'échantillon à fournir à l'organe 38, un organe de séquencement 78 pour régir le fonctionnement de l'organe de correction 50 et un ensemble de porte ET à deux entrées 80, 81 et 82 coopérant avec l'organe de séquencement 78. La porte 80 interconnecte par sa première entrée et sa sortie l'organe de décodage 55 avec l'organe de séquencement 78. La deuxième entrée reçoit un signal de validation WD qui définit une "fenêtre" de décodage en un moment où le mot WSL est susceptible d'apparaître, on évite ainsi qu'une reconnaissance erronée survienne au cours d'une ligne. Les sorties des portes ET 81 et 82 sont reliées aux entrées de comptage des compteurs 68 et 70 ; à une de leurs entrées elles reçoivent un signal CK qui provient de la base de temps 40 et qui fixe l'apparition d'échantillons à fournir à l'organe de visualisation 42. L'autre entrée de la porte 81 est reliée à l'organe 78 pour recevoir EW qui autorise la progression du compteur 68 et le fonctionnement du décodeur 35. L'autre entrée de la porte 82 est reliée aussi à l'organe 78 pour recevoir un signal ER qui autorise ou non la progression du compteur 70. L'organe 78 délivre aussi des signaux RZW pour mettre à zéro le contenu du compteur 68 et RZR pour mettre à zéro le contenu du compteur 70. L'organe 78 élabore ces différents signaux en fonction du signal de sortie de la porte 80 comme déjà dit et aussi en fonction du contenu du compteur 68 et des signaux QW et QR provenant des compteurs 68 et 70 pour indiquer qu'ils sont à leur capacité maximale.

L'organe de séquencement peut aisément être conçu à partir des considérations suivantes : on admet que les lignes ont "p" pixels ce qui correspond aux capacités de comptage des compteurs 68 et 70 et on examine maintenant les cas suivants.

1) Le nombre d'échantillons décodés est égal à "p" (fonctionnement normal).

Dans ce cas le premier mot WSL est reconnu lorsque le contenu du compteur 68 est égal à "p", ainsi celui-ci est remis à zéro lorsque le mot WSL est reconnu une deuxième fois. Le contenu du compteur 70 est remis à zéro dès qu'il a atteint sa valeur maximale; le signal QR prend alors sa valeur active.

2) Le nombre d'échantillons décodés est inférieur à "p".

Comme ci-dessus l'apparition de WSL remet à zéro le compteur 68 et le signal EW bloque le décodeur 35 et empêche la progression du compteur 68 tant que le compteur 70 n'a pas atteint sa position maximale (QR actif).

3) Le nombre d'échantillons décodés est supérieur à "p", soit p+K échantillons sont décodés avant l'apparition de WSL.

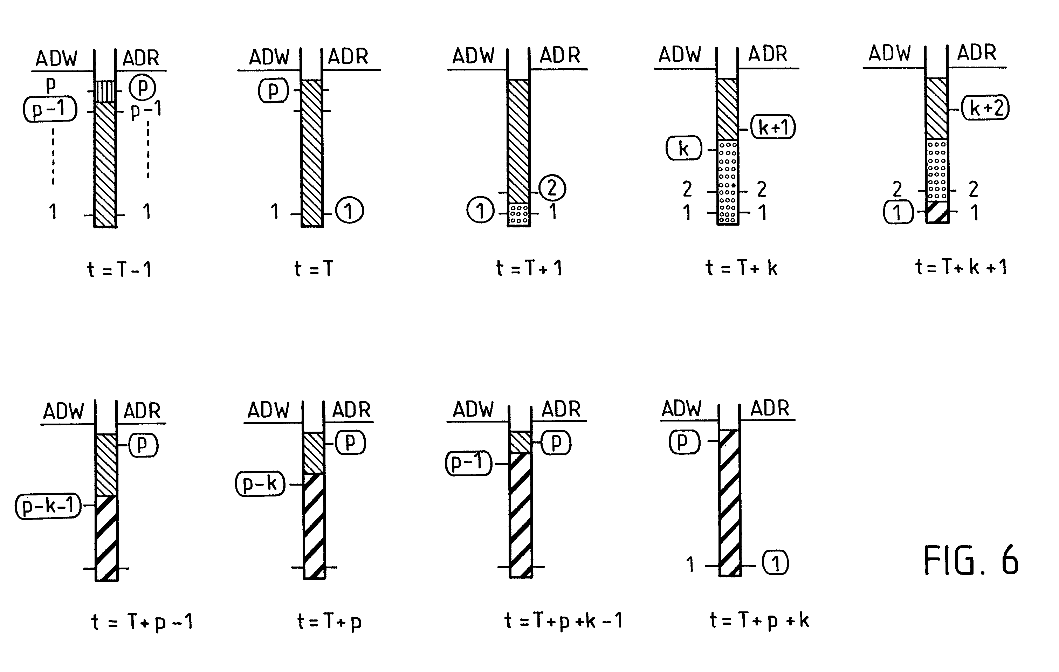

Le fonctionnement de ce cas est expliqué à l'aide de la figure 6. Sur cette figure ADW et ADR représentent le contenu des compteurs 68 et 70.

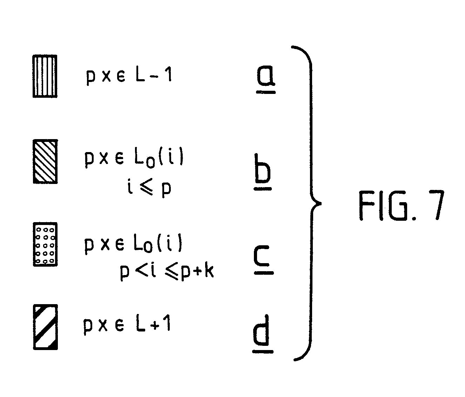

On se place à l'instant $t = T-1$ où le contenu du compteur est p-1. A cet emplacement s'enregistre l'échantillon relatif à une ligne $L_0$ ce qui implique que les emplacements 1 à p-1 soient occupés par des échantillons représentant les pixels de la ligne $L_0$ (voir légende figure 7). A cet instant le contenu du compteur 70 est p ; à cet emplacement on a l'échantillon représentant un pixel appartenant à la ligne antérieure $L_{-1}$.

A l'instant $t = T$ les contenus ADW et ADR sont respectivement p et 1, le premier échantillon de la ligne $L_0$ est lu.

A l'instant $t = T+1$ un deuxième échantillon de $L_0$ est lu, mais l'échantillon inscrit dans la mémoire 60, lui, ne sera jamais lu comme on le verra par la suite.

A l'instant $t = T+k$, k échantillons qui ne seront jamais lus sont inscrit dans la mémoire et c'est à cet instant que WSL apparaît, ce qui fait qu'à l'instant $t = T+k+1$ le compteur 68 est initialisé et ADW = 1, mais le compteur 70 continue sa progression jusqu'à l'instant T+p-1 où il atteint sa position maximale "p" ; le signal ER devient actif et le bloque à ce contenu jusqu'à ce que le contenu du compteur 60 atteigne p-1 à l'instant T+p+k-1 ; à l'instant suivant = T+p+k on considère que la correspondance échantillon et emplacement du pixel est respectée.

5

## Revendications

1. Dispositif de transmission d'informations utilisant un codage statistique, dispositif comportant une partie émission destinée à transmettre des informations se présentant sous forme de série d'échantillons numériques et pourvu à cet effet d'un organe de codage statistique pour transformer les échantillons numériques en mots de code statistique et un circuit multiplexeur pour insérer parmi les mots de code statistique des mots de synchronisation, et au moins une partie réception pourvue d'un organe de réception pour recevoir les mots de codes transmis et d'un circuit de correction coopérant avec un circuit de détection de mot de synchronisation pour pouvoir rétablir les séries d'échantillons numériques après le traitement apporté par un organe de décodage statistique afin de les fournir à un organe d'utilisation, caractérisé en ce que le mot de synchronisation est un mot de code autosynchronisable inséré au moins deux fois aux extrémités des séries.

2. Dispositif de transmission d'informations selon la revendication 1, caractérisé en ce que le circuit de correction est formé d'un organe de mémorisation d'une capacité suffisante pour contenir au moins une série d'échantillons, d'un compteur d'écriture pour former des codes d'adresses définissant les emplacements des échantillons dans ledit organe de mémorisation transmis à enregistrer, d'un compteur de lecture pour définir l'emplacement dans l'organe de mémorisation de l'échantillon à fournir à l'organe d'utilisation et d'un organe de séquencement destiné à bloquer ou à autoriser la progression desdits compteurs en fonction du signal fourni par le circuit de détection.

3. Dispositif de transmission d'informations selon la revendication 1 ou 2, caractérisé en ce que l'organe de séquencement fournit un signal de fenêtre pour valider dans un laps de temps où le mot de synchronisation est susceptible d'être reçu, le signal de sortie du circuit de détection.

4. Partie émission convenant pour un dispositif de transmission de l'une des revendications 1 à 3, comportant un organe de codage statistique pour transformer des échantillons numériques à transmettre en mots de code statistique et un circuit multiplexeur pour insérer parmi les mots de code statistique des mots de synchronisation, au moins un mot de code autosynchronisable répété au moins deux fois aux extrémités des séries.

5. Partie réception convenant pour un dispositif de transmission de l'une des revendications 1 à 3, comportant un organe de réception pour recevoir des séries de mots de code transmis aux extrémités desquelles sont disposés des mots de synchronisation formés d'au moins deux mots de code d'autosynchronisation, un circuit de détection de mot de code d'autosynchronisation pour fournir un signal de reconnaissance de mot de code, un organe de mémorisation d'une capacité suffisante pour contenir au moins une série d'échantillons, un compteur d'écriture pour former des codes d'adresses définissant les emplacements des échantillons à enregistrer, transmis dans ledit organe de mémorisation, un compteur de lecture pour définir l'emplacement dans l'organe de mémorisation de l'échantillon à fournir à un organe d'utilisation et un organe de séquencement destiné à bloquer ou à autoriser la progression desdits compteurs en fonction du signal de reconnaissance.

EP 0 376 384 A1

I

FIG. 1

R

FIG. 3

FIG. 4

FIG. 2

EP 0 376 384 A1

W7   W8   W7   W7   W6   W8   W9   W8        WSL              WSL

|0 1|1 0 1|0 1|0 0 0 1 1|1|0 0 1|1|0 0 0 0 0 0 1 1 1 1 1 1|0 0 0 0 0 0 1 1 1 1 1 1|   a

|0 1|1 0 1|0 1|1 0 0 1|1|1 0 0 1|1|0 0 0 0 0 0 1 1 1 1 1 1|0 0 0 0 0 0 1 1 1 1 1 1|   b

W7   W8   W7   W7   W8   W9   W8   W8   W9   W8        WSL              WSL

|0 1|1 0 1|0 1|0 0 0 1 1|0 0 0 1 1|0 0 0 0 0 0 1|0 1|1|1|1|0 0 0 0 0 0 1 1 1 1 1 1|   c

W7   W8   W7   W7   W6        W6           W8 (TABLEAU II)   W8   W8   W8   W8   WSL

FIG. 5

3-亚 PHF 88-650

EP 0 376 384 A1

ADW | ADR

p
(p-1)
⋮
1
(P)
p-1
⋮
1

t = T-1

ADW | ADR

(P)
1
(1)

t = T

ADW | ADR

(1)
1
(2)

t = T+1

ADW | ADR

(k)
2
1
(k+1)
2
1

t = T+k

ADW | ADR

2
(1)
(k+2)
2
1

t = T+k+1

ADW | ADR

(p-k-1)
(P)

t = T+p-1

ADW | ADR

(p-k)
(P)

t = T+p

ADW | ADR

(p-1)
(P)

t = T+p+k-1

ADW | ADR

(P)
1
(1)

t = T+p+k

FIG. 6

$p \times \in L-1$  <u>a</u>

$p \times \in L_0(i)$
$i \leqslant p$  <u>b</u>

$p \times \in L_0(i)$
$p < i \leqslant p+k$  <u>c</u>

$p \times \in L+1$  <u>d</u>

FIG. 7

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | ELECTRONICS AND COMMUNICATIONS IN JAPAN, vol. 59-A, no. 11, novembre 1976, pages 51-60, Washington, US; Y. SATO et al.: "DPCM coding method using variable-length codes for video telephone signals"<br>* Page 51, colonne de gauche, ligne 31 - colonne de droite, ligne 8; page 55, colonne de droite - page 57, colonne de gauche, paragraphes 6.1,6.2a; page 57, colonne de droite - page 58, colonne de droite, paragraphe 6.3 *<br>--- | 1,2,4,5 | H 04 J    3/06<br>H 04 L    7/04 |
| D,A | IEEE TRANSACTIONS ON INFORMATION THEORY, vol. IT-30, no. 4, juillet 1984, pages 687-693, IEEE, New York, US; T.J. FERGUSON et al.: "Self-synchronizing Huffman codes"<br>* Page 687, colonne de droite, ligne 54 - page 688, colonne de gauche, ligne 3; page 688, colonne de gauche, lignes 26-30 *<br>--- | 1 | |
| A | GB-A-2 172 176  (OKI ELECTRIC INDUSTRY)<br>* Page 1, lignes 54-81; page 2, ligne 37 - page 3, ligne 113 *<br>--- | 1,2,4,5 | **DOMAINES TECHNIQUES RECHERCHES (Int. Cl.5)**<br>H 04 J<br>H 04 L |
| A | EP-A-0 130 899  (THOMSON-CSF)<br>* Page 1, lignes 12-26; page 3, ligne 15 - page 4, ligne 1; page 4, ligne 15 - page 5, ligne 29; page 7, lignes 7-24 *<br><br>----- | 1-5 | |

Le présent rapport a été établi pour toutes les revendications

| Lieu de la recherche | Date d'achèvement de la recherche | Examinateur |
|---|---|---|
| LA HAYE | 04-04-1990 | VAN DEN BERG,J.G.J. |